# EUROPEAN PATENT APPLICATION

(11) **EP 4 468 505 A1**
(43) Date of publication of application: **27.11.2024**
(21) Application number: 23217972.1
(22) Date of filing: 19.12.2023
(51) Int. Cl.: H01M 50/503, H01M 50/583

(54) **BUS BAR ASSEMBLY AND BATTERY MODULE**

(30) Priority: 22.05.2023 CN 202321249449 U
(71) Applicant: AESC Dynamics Technology (Hubei) Ltd., Shiyan, Hubei Province 442002 (CN)
(72) Inventor: WU, Changjun, Kangqiao Town, Pudong New Area Shanghai, 201315 (CN); CHEN, Zhuolie, Kangqiao Town, Pudong New Area Shanghai, 201315 (CN); YUAN, Zhuchen, Kangqiao Town, Pudong New Area Shanghai, 201315 (CN); CUI, Xin, Kangqiao Town, Pudong New Area Shanghai, 201315 (CN); HE, Yafei, Kangqiao Town, Pudong New Area Shanghai, 201315 (CN)
(74) Representative: Becker, Eberhard

(57) **Abstract**

A bus bar assembly and a battery module are provided. The bus bar assembly includes a bus bar support (300), an output terminal bus bar (100) and a fireproof sleeve (200). The output terminal bus bar (100) is disposed on the bus bar support (300), wherein the output terminal bus bar (100) includes a cell connection portion (102), an output connection portion (101) and a fuse portion (103). The cell connection portion (102) is connected to the output connection portion (101) through the fuse portion (103). The fireproof sleeve (200) is sleeved on the output terminal bus bar (100) and at least covers the fuse portion (103), and is located at one side of the bus bar support (300) facing away from the cell.

## Description

### BACKGROUND

### Technical Field

The disclosure belongs to the technical field of power batteries, and in particular relates to a bus bar assembly and a battery module.

### Description of Related Art

In order to realize higher power and energy density, current lithium-ion batteries for vehicles and energy storage are normally designed by increasing the voltage of the module and the battery pack. Under the circumstances, the current of the module will also increase, and normally fuses are disposed in order to ensure safe operation of the circuit of the battery. When a circuit failure or abnormality occurs, such as an external short circuit, and as the current continues to rise, the fuse will be automatically melted to cut off the current and protect the circuit. In a module (especially a commonly adopted soft package module), in order to integrate the positive output terminal/negative output terminal bus bar (copper bar) with the fuse, the fuse is designed to be part of the positive output terminal/negative output terminal bus bar. If part of the bus bar is thinned, the resistance at the thinned region will increase. When an external short circuit occurs, the current will increase, and the temperature at the thinned region will rise fast and the thinned region will be melted first to cut off the circuit. However, sparks and dramatic arcing will occur to cause surrounding components to catch fire, which may easily cause the module to catch fire and affect the safety of the battery module.

### SUMMARY

In view of the above shortcomings of the related art, to solve the problem that sparks and arcing might easily occur during the melting process of the fuse and cause fire, the present disclosure provides a bus bar assembly and a battery module that might improve the safety of bus bar assembly and battery module.

In order to achieve the above purpose and other related purposes, the disclosure provides a bus bar assembly including a bus bar support, an output terminal bus bar and a fireproof sleeve. The output terminal bus bar is disposed on the bus bar support, wherein the output terminal bus bar includes a cell connection portion, an output connection portion and a fuse portion, and the cell connection portion and the output connection portion are connected through the fuse portion. The fireproof sleeve is sleeved on the output terminal bus bar, and at least covers the fuse portion, and located at one side of the bus bar support facing away from the cell.

Optionally, a blasting guide structure is disposed on the fireproof sleeve.

Optionally, a blasting avoidance region corresponding to the fireproof sleeve is disposed between the cell connection portion and the output connection portion, and the blasting guide structure faces the blasting avoidance region.

Optionally, the width of the fuse portion is smaller than the width of the cell connection portion and the width of the output connection portion, and a recess is provided between and encircled by the fuse portion, the cell connection portion and the output connection portion , the opening of the recess faces away from the bus bar support, and the recess forms the blasting avoidance region.

Optionally, the blasting guide structure is formed by thinning a part of the fireproof sleeve.

Optionally, the blasting guide structure is a notch.

Optionally, one end of the fireproof sleeve extends toward the cell connection portion and at least covers a part of the cell connection portion; the other end of the fireproof sleeve extends toward the output connection portion and at least covers a part of the output connection portion.

Optionally, the fireproof sleeve is fixed on the output terminal bus bar by hot pressing.

In order to achieve the above purpose and other related purposes, the present disclosure further provides a battery module, including the bus bar assembly as mentioned above.

Optionally, a cell is also included, and the cell and the fireproof sleeve are respectively located at two opposite sides of the bus bar support.

As mentioned above, the bus bar assembly and battery module of the present disclosure at least have the following advantageous effects: a fireproof sleeve covering the fuse portion is disposed on the output terminal bus bar, and the fireproof sleeve protects the fuse portion and alleviates the impact of sparks on surrounding components at the moment that the fuse portion is melted, thereby preventing fire caused by arcing. Based on the above, the fireproof sleeve is located at one side of the bus bar support facing away from the cell to prevent sparks from spreading to the inside of the battery module and causing fire in the battery module. In this way, it is possible to improve the safety performance of the bus bar assembly and the battery module.

### BRIEF DESCRIPTION OF THE DRAWINGS

FIG. 1 is a schematic structural view of an embodiment of the bus bar assembly of the present disclosure.
FIG. 2 is a schematic structural view of the bus bar assembly in FIG. 1 with the end plate removed.
FIG. 3 is a partial front view of the bus bar assembly in FIG. 2.
FIG. 4 is a schematic structural view of a first embodiment of the output terminal bus bar and the fireproof sleeve in FIG. 3.
FIG. 5 is a schematic structural view of the output terminal bus bar in FIG. 4 with the fireproof sleeve removed.
FIG. 6 is a front view of the output terminal bus bar and fireproof sleeve in FIG. 4.
FIG. 7 is a schematic structural view of the fireproof sleeve in FIG. 4.
FIG. 8 is a front view of the fireproof sleeve in FIG. 7.
FIG. 9 is a schematic structural view of a second embodiment of the output terminal bus bar and the fireproof sleeve in FIG. 3.
FIG. 10 is a front view of the output terminal bus bar and the fireproof sleeve in FIG. 9.

### DESCRIPTION OF THE EMBODIMENTS

The implementation of the present disclosure is described below with specific examples. Those familiar with the technology can easily understand other advantages and effects of the present disclosure from the content disclosed in this specification.

It should be noted that the structures, proportions, sizes, etc. shown in the drawings attached to this specification are only used to match the content disclosed in the specification and are for the understanding and comprehension of people familiar with this technology. They are not provided to limit the implementation of the present disclosure. Therefore, the content in the drawings has no technical substantive significance. Any structural modifications, changes in proportions, or adjustments in size should still fall within the scope that may be covered by the technical content disclosed in this disclosure without affecting the effects that the disclosure can produce and the purposes that can be achieved. In the meantime, terms such as "upper", "lower", "left", "right", "middle" and "one" cited in this specification are only for convenience of description and are not used to limit the scope of this specification. As for the implementable scope of the disclosure, changes or adjustments in the relative relationships shall also be regarded as the implementable scope of the disclosure, provided there is no substantial change in the technical content.

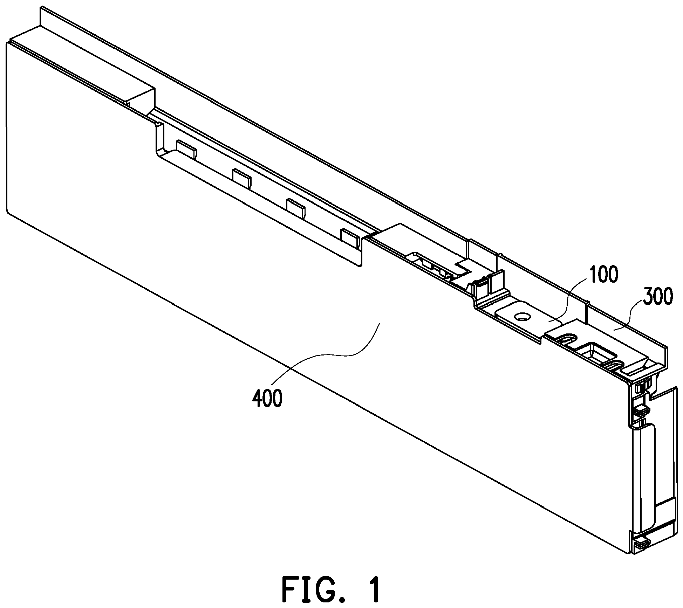

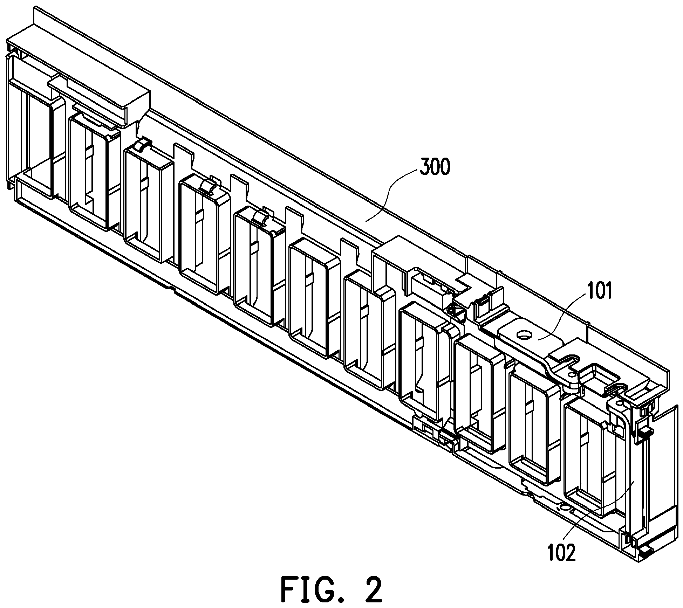

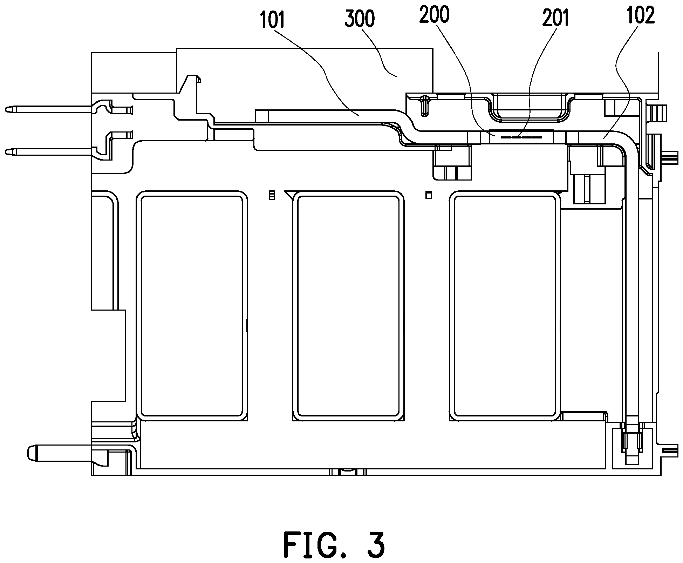

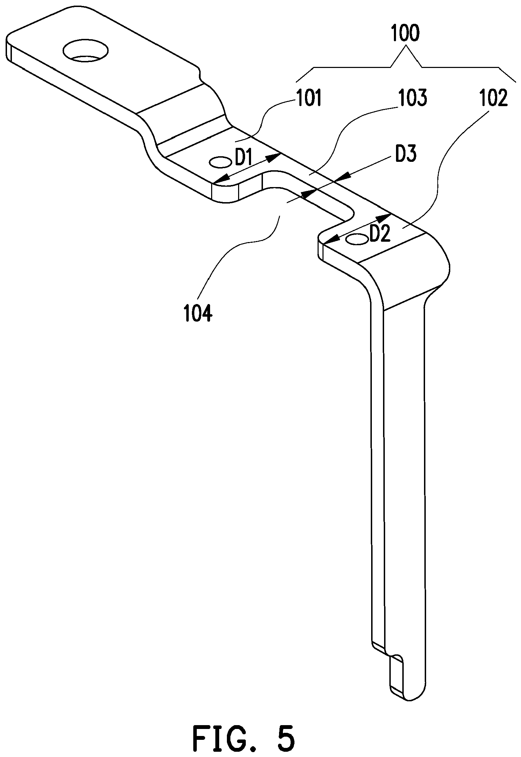

Referring to FIG. 1 to FIG. 5 and FIG. 9, in some optional embodiments, the present disclosure provides a battery module including a bus bar assembly. In addition to the bus bar assembly, the battery module may further include a cell and/or an end plate 400.

Referring to FIG. 1 to FIG. 5 and FIG. 9, in some optional embodiments, the bus bar assembly includes a bus bar support 300, an output terminal bus bar 100 and a fireproof sleeve 200. The output terminal bus bar 100 is disposed on the bus bar support 300, and the bus bar support 300 may provide support for configuration of the output terminal bus bar 100. The output terminal bus bar 100 includes a cell connection portion 102, an output connection portion 101, and a fuse portion 103. The cell connection portion 102 and the output connection portion 101 are connected through the fuse portion 103. The fireproof sleeve 200 is sleeved on the output terminal bus bar 100, and the fireproof sleeve 200 at least covers the fuse portion 103 and is located at one side of the bus bar support 300 facing away from the cell.

Optionally, the cell connection portion 102 is disposed to be electrically connected with the cell and the bus bar connected between the cell, and realize the electrical connection between the cell and the exterior through the output connection portion 101 to lead the electric energy of the cell to the exterior of the cell.

Optionally, the cell and the fireproof sleeve 200 are located at two opposite sides of the bus bar support 300 respectively. The end plate 400 is located at one side of the bus bar support 300 facing away from the cell. That is, the end plate 400 is located outside the bus bar support 300. At least part of the output terminal bus bar 100 and the fireproof sleeve 200 are located between the end plate 400 and the bus bar support 300. The layout structure not only may alleviate the impact of the fuse portion 103 on the cell and other components located inside the bus bar support 300 at the moment that the fuse portion 103 is melted, but also may avoid the impact on the components located outside the end plate 400. In this way, the sparks generated at the moment of melting fall in the gap region between the end plate 400 and the bus bar support 300 and protection is provided by the fireproof sleeve 200, which reduces the impact on surrounding components and safety and reliability are ensured. The outside of the end plate 400 refers to one side of the end plate 400 facing away from the bus bar support 300.

Optionally, the fireproof sleeve 200 may be hot-pressed and fixed on the output terminal bus bar 100. The fixing and molding method is simple and the production is convenient. The fireproof sleeve 200 is disposed on the output terminal bus bar 100 by hot pressing, which also improves the convenience of assembly with other components on the production line. Such design makes assemble easy, saves man-hours, and improves production efficiency.

Optionally, the fireproof sleeve 200 is made of other insulating, high-temperature resistant and fireproof materials such as PP (polypropylene), PI (polyimide) or mica. The fireproof sleeve 200 has good fire protection, heat insulation, high-temperature resistance and insulation properties. It is possible to effectively alleviate the impact of sparks generated by the fuse portion 103 at the moment of melting on surrounding components and prevent fire caused by arcing phenomenon. The end plate 400 further has good fire protection, heat insulation, high-temperature resistance and insulation properties, which further prevents the sparks from spreading outward during the melting process of the fuse portion 103 and affecting surrounding components, thereby improving the safety performance.

In the bus bar assembly of the above embodiment, the fuse portion 103 is covered with the fireproof sleeve 200, which simultaneously serves buffering and thermal insulation functions. In this way, it is possible to mitigate the damage caused to other components by sparks generated when the fuse portion 103 is melted, and prevent arcing from causing fire to surrounding components so as to improve safety performance.

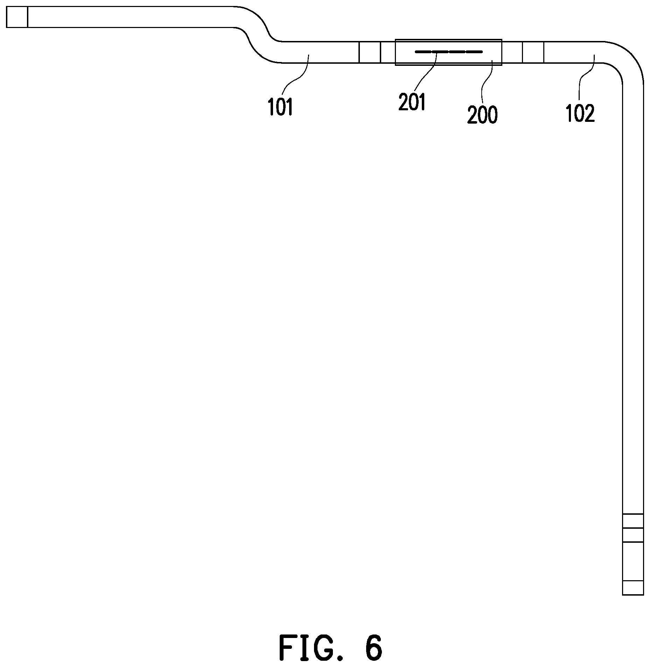

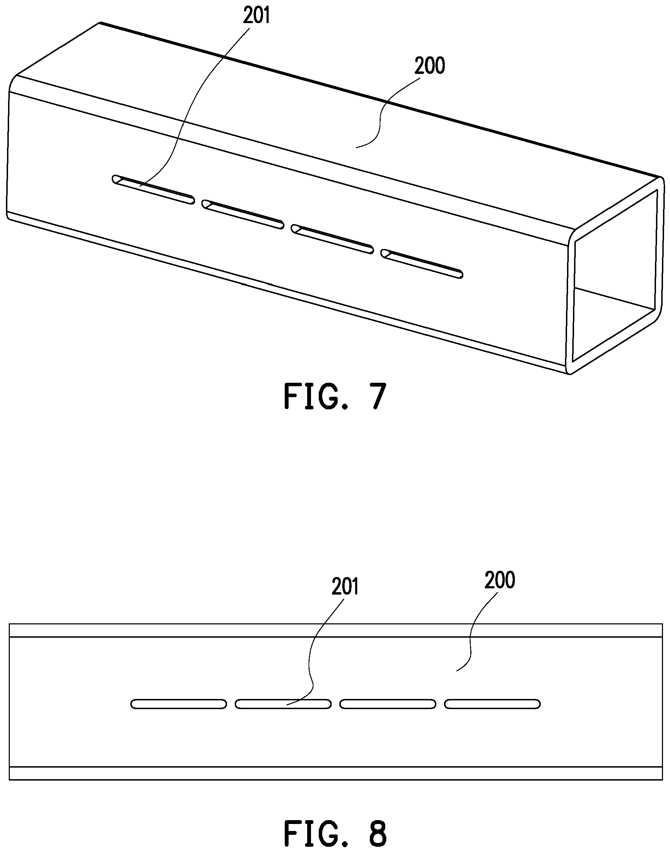

Referring to FIG. 1, FIG. 4 to FIG. 10, in some optional embodiments, a blasting guide structure 201 is disposed on the fireproof sleeve 200, so that when the fuse portion 103 is melted and generates sparks, the fireproof sleeve 200 is able to be blasted in an directional manner, thereby mitigating the damage caused by arcing at the moment that the fuse portion 103 is melted while transferring the damage to a region with less hazard, that is, a region with a large air gap.

Optionally, a blasting avoidance region 104 corresponding to the fireproof sleeve 200 is disposed between the cell connection portion 102 and the output connection portion 101. The blasting guide structure 201 faces the blasting avoidance region 104 to avoid the sparks generated when the fuse portion 103 is melted from affecting the cell connection portion 102 and output connection portion 101.

Optionally, the width of the fuse portion 103 is smaller than the width of the cell connection portion 102 and the width of the output connection portion 101, and a recess is provided between and encircled by the fuse portion 103, the cell connection portion 102 and the output connection portion 101, and the opening of the recess faces away from the bus bar support 300, that is, the opening of the recess faces the end plate 400, and the recess forms the blasting avoidance region 104. Further, the width of one end of the output connection portion 101 connected to the fuse portion 103 is D1, the width of one end of the cell connection portion 102 connected to the fuse portion 103 is D2, the width of the fuse portion 103 is D3, and both D1 and D2 are greater than D3. The output connection portion 101, the fuse portion 103 and the cell connection portion 102 may be connected to encircle a U-shaped recess. It may be understood that the recess may also be C-shaped or other structures, and is not limited to the structure illustrated herein. The recess corresponds to the fuse portion 103 and the blasting guide structure 201 so that the blasting guide structure 201 is able to transfer the hazard to a region with a larger gap when the fuse portion 103 is melted, thereby mitigating the damage caused to other components.

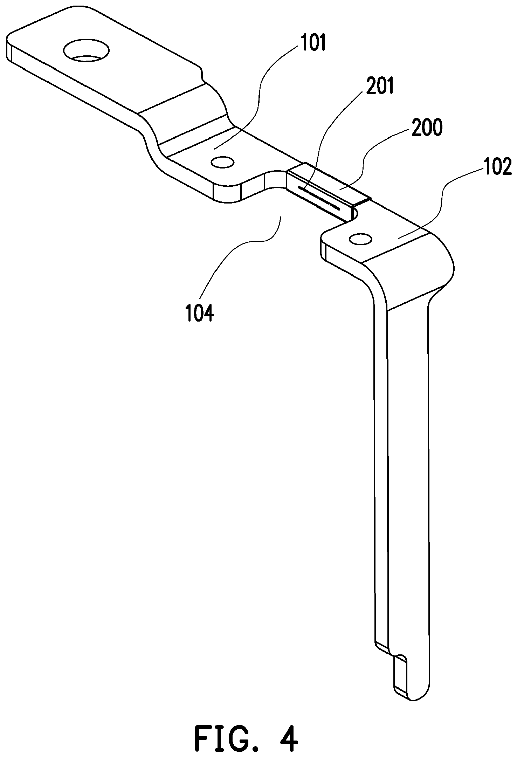

Referring to FIG. 4 to FIG. 10, in some optional embodiments, the strength of the blasting guide structure 201 is less than the structural strength of other parts of the fireproof sleeve 200.

Optionally, the blasting guide structure 201 may be formed by thinning part of the fireproof sleeve 200, that is, the thickness of the blasting guide structure 201 is less than the thickness of other parts of the fireproof sleeve 200, so that when the fireproof sleeve 200 is impacted, the blasting guide structure 201 is damaged first, so that the impact or sparks are directed to the blasting avoidance region 104. Further, the blasting guide structure 201 may be a notch; specifically, the notch may be a "-" shape, a "+" shape or other shapes, and the number of the notches may be one, two or more. The number of notches may be set according to needs. When the number of notches is two or more, each notch is distributed at intervals along the length direction of the fireproof sleeve 200. Such structural design not only may ensure the structural strength of the fireproof sleeve 200, but also help to completely transfer the sparks or smoke generated in the melting process to the blasting avoidance region 104 in a timely manner, thereby mitigating the risk of damage to other components. The length direction of the fireproof sleeve 200 is the same as the length direction of the fuse portion 103.

Optionally, the material strength of the blasting guide structure 201 is lower than the material strength of other parts of the fireproof sleeve 200, that is to say, the materials of the blasting guide structure 201 and other parts of the fireproof sleeve 200 may be made of materials with different strengths, so that the blasting guide structure 201 is more easily damaged than other parts of the fireproof sleeve 200 so as to achieve the purpose of directional blasting.

Optionally, the shape of the fireproof sleeve 200 matches the shape of the part covered by the output terminal bus bar 100. Furthermore, the whole or part of the fireproof sleeve 200 may be a square tubular structure; specifically, a portion of the fireproof sleeve 200 corresponding to the fuse portion 103 may be a square tubular structure.

In the bus bar assembly of the above embodiment, a blasting guide structure 201 is disposed on the fireproof sleeve 200 so that directional blasting may be carried out when the fuse portion 103 is melted, which not only may mitigate the damage caused by sparks and arcing at the moment of melting, but also transfer the hazard to the blasting avoidance region 104 to avoid other components, thereby preventing damage from being extended to other components and further reducing the possibility of fire.

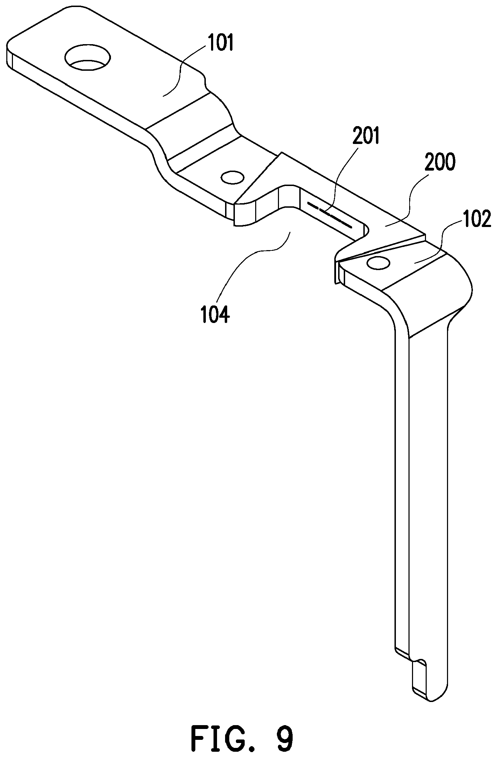

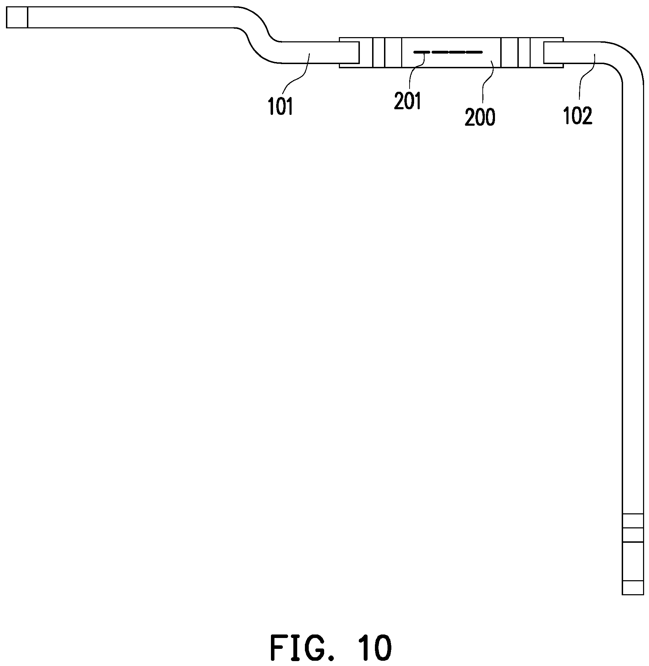

Referring to FIG. 9 and FIG. 10, in an optional embodiment, one end of the fireproof sleeve 200 extends toward the cell connection portion 102 and at least covers part of the cell connection portion 102; the other end of the fireproof sleeve 200 extends toward the output connection portion 101 and at least covers part of the output connection portion 101. Specifically, the fireproof sleeve 200 may cover the side wall of the recess, the surface of one end of the cell connection portion 102 close to the fuse portion 103 and the surface of one end of the output connection portion 101 close to the fuse portion 103. Such structural design not only may fully cover an area of the output terminal bus bar 100 close to the surroundings of the fuse portion 103 to mitigate the impact of sparks, but also may increase the contact area between the fireproof sleeve 200 and the output terminal bus bar 100. In this way, the fireproof sleeve 200 may be more securely fixed on the output terminal bus bar 100, so that the structure is more stable and reliable.

In the bus bar assembly and battery module of the present disclosure, the output terminal bus bar 100 is integrated with a fireproof sleeve 200 covering the fuse portion 103, so that the impact on other components may be mitigated when the fuse portion 103 is melted. In addition, the blasting guide structure 201 is disposed on the fireproof sleeve 200 to realize directional blasting, protect the components around the fuse portion 103, prevent sparks from spreading and fire caused by arcing, and improve the safety of the bus bar assembly and battery module.

In the description of this specification, reference to the description of "this embodiment", "example", "specific example", etc. means that the specific features, structures, materials or characteristics described in connection with the embodiment or example are included in at least one embodiment or example of the present disclosure. In this specification, schematic representations of the above terms do not necessarily refer to the same embodiment or example. Furthermore, the specific features, structures, materials or characteristics described may be combined in any suitable manner in any one or more embodiments or examples.

## Claims

1. A bus bar assembly, **characterized by** comprising:
a bus bar support (300);
an output terminal bus bar (100) disposed on the bus bar support (300), wherein the output terminal bus bar (100) comprises a cell connection portion (102), an output connection portion (101) and a fuse portion (103), and the cell connection portion (102) and the output connection portion (101) are connected through the fuse portion (103); and
a fireproof sleeve (200) sleeved on the output terminal bus bar (100), and at least covering the fuse portion (103), and located at one side of the bus bar support (300) facing away from a cell.

2. The bus bar assembly according to claim 1, **characterized in that** a blasting guide structure (201) is disposed on the fireproof sleeve (200).

3. The bus bar assembly according to claim 2, **characterized in that** a blasting avoidance region (104) corresponding to the fireproof sleeve (200) is disposed between the cell connection portion (102) and the output connection portion (101), and the blasting guide structure (201) faces the blasting avoidance region (104).

4. The bus bar assembly according to claim 3, **characterized in that** a width (D3) of the fuse portion (103) is smaller than a width (D2) of the cell connection portion (102) and a width (D1) of the output connection portion (101), and a recess is provided between and encircled by the fuse portion (103), the cell connection portion (102) and the output connection portion (101), an opening of the recess faces away from the bus bar support (300), and the recess forms the blasting avoidance region (104).

5. The bus bar assembly according to claim 2, **characterized in that** the blasting guide structure (201) is formed by thinning a part of the fireproof sleeve (200).

6. The bus bar assembly according to claim 5, **characterized in that** the blasting guide structure (201) is a notch.

7. The bus bar assembly according to claim 1, **characterized in that** one end of the fireproof sleeve (200) extends toward the cell connection portion (102) and at least covers a part of the cell connection portion (102); another end of the fireproof sleeve (200) extends toward the output connection portion (101) and at least covers a part of the output connection portion (101).

8. The bus bar assembly according to claim 1, **characterized in that** the fireproof sleeve (200) is fixed on the output terminal bus bar (100) by hot pressing.

9. A battery module, **characterized by** comprising the bus bar assembly according to any one of claims 1-8.

10. The battery module according to claim 9, **characterized by** further comprising a cell, wherein the cell and the fireproof sleeve (200) are respectively located at two opposite sides of the bus bar support (300).

## Amended claims

### Amended claims in accordance with Rule 137(2) EPC.

1. A bus bar assembly, comprising:
a bus bar support (300);
an output terminal bus bar (100) disposed on the bus bar support (300), wherein the output terminal bus bar (100) comprises a cell connection portion (102), an output connection portion (101) and a fuse portion (103), and the cell connection portion (102) and the output connection portion (101) are connected through the fuse portion (103); and
a fireproof sleeve (200) sleeved on the output terminal bus bar (100), and at least covering the fuse portion (103), and located at one side of the bus bar support (300) facing away from a cell,
wherein the bus bar assembly is **characterized in that**
a blasting guide structure (201) is disposed on the fireproof sleeve (200).

2. The bus bar assembly according to claim 1, **characterized in that** a blasting avoidance region (104) corresponding to the fireproof sleeve (200) is disposed between the cell connection portion (102) and the output connection portion (101), and the blasting guide structure (201) faces the blasting avoidance region (104).

3. The bus bar assembly according to claim 2, **characterized in that** a width (D3) of the fuse portion (103) is smaller than a width (D2) of the cell connection portion (102) and a width (D1) of the output connection portion (101), and a recess is provided between and encircled by the fuse portion (103), the cell connection portion (102) and the output connection portion (101), an opening of the recess faces away from the bus bar support (300), and the recess forms the blasting avoidance region (104).

4. The bus bar assembly according to claim 1, **characterized in that** the blasting guide structure (201) is formed by thinning a part of the fireproof sleeve (200).

5. The bus bar assembly according to claim 4, **characterized in that** the blasting guide structure (201) is a notch.

6. The bus bar assembly according to claim 1, **characterized in that** one end of the fireproof sleeve (200) extends toward the cell connection portion (102) and at least covers a part of the cell connection portion (102); another end of the fireproof sleeve (200) extends toward the output connection portion (101) and at least covers a part of the output connection portion (101).

7. The bus bar assembly according to claim 1, **characterized in that** the fireproof sleeve (200) is fixed on the output terminal bus bar (100) by hot pressing.

8. A battery module, **characterized by** comprising the bus bar assembly according to any one of claims 1-7.

9. The battery module according to claim 8, **characterized by** further comprising a cell, wherein the cell and the fireproof sleeve (200) are respectively located at two opposite sides of the bus bar support (300).
